(19)

**Europäisches Patentamt**

**European Patent Office**

**Office européen des brevets**

(11) **EP 3 153 227 A1**

(12) **EUROPÄISCHE PATENTANMELDUNG**

(43) Veröffentlichungstag:
**12.04.2017 Patentblatt 2017/15**

(51) Int Cl.:
***B01D 61/14*** *(2006.01)* ***C08G 61/08*** *(2006.01)*
***C08G 61/12*** *(2006.01)*

(21) Anmeldenummer: **15188716.3**

(22) Anmeldetag: **07.10.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Evonik Degussa GmbH
45128 Essen (DE)**

(72) Erfinder:
• **Wursche, Roland
48249 Dülmen (DE)**

• **Herwig, Jürgen
46569 Hünxe (DE)**
• **Kreis, Peter
44227 Dortmund (DE)**
• **Lazar, Marina
45665 Recklinghausen (DE)**
• **Roos, Martin
45721 Haltern am See (DE)**
• **Baumgarten, Goetz
45721 Haltern am See (DE)**
• **Schnitzer, Christian
48249 Dülmen (DE)**

(54) **VERFAHREN ZUR HERSTELLUNG VON POLYALKENAMEREN FÜR VERPACKUNGSANWENDUNGEN**

(57) Die vorliegende Erfindung betrifft ein Verfahren zur Herstellung von Cycloalkenamer-haltigen Zusammensetzungen mittels Diafiltration. Die Erfindung betrifft weiterhin die Verwendung der Cycloalkenamer-haltigen Zusammensetzungen auf dem Gebiet von Verpackungsmaterialien, insbesondere für Lebensmittel.

EP 3 153 227 A1

**Beschreibung**

Die vorliegende Erfindung betrifft ein Verfahren zur Herstellung Polyalkenamer-haltiger Zusammensetzungen. Die Erfindung betrifft weiterhin die Verwendung von Polyalkenamer-haltigen Zusammensetzungen auf dem Gebiet von Verpackungsmaterialien, insbesondere für Lebensmittel.

Zur Erhöhung der Lebensdauer verpackter Lebensmittel kann das Prinzip der aktiven Sauerstoffbarriere angewendet werden. Dies bedeutet, dass neben den üblichen passiven Barriereschichten wie zum Beispiel Polyamid 6, Polyethylenterephthalat oder Ethylen-Vinylalkohol-Copolymer zusätzliche "aktive" Komponenten in der Verpackung eingesetzt werden, die Sauerstoff durch chemische Reaktion (Oxidation) binden. Dies kann sich einerseits auf Sauerstoff beziehen, der im Inneren einer Verpackung präsent ist (Restsauerstoff in Modified Atmosphere Packaging- (MAP-)Verpackungen), zum anderen auf Sauerstoff, der im Laufe der Zeit durch die Passiv-Barriere in die Verpackung diffundiert. Dabei kann die "aktive" Komponente in unterschiedlichen Bereichen der Verpackung vorhanden sein, beispielsweise kann sie Teil einer separaten Schicht eines mehrschichtigen Verpackungssystems sein oder auch direkt in die oben genannte passive Barriereschicht eingebracht werden. Durch die chemische Reaktion mit der zusätzlichen "aktiven" Komponente wird eine chemische Reaktion des Sauerstoffs mit z.B. Inhaltsstoffen der verpackten Lebensmittel (Fette, Vitamine, etc.) oder auch das aerobe Bakterien- und Schimmelwachstum gemindert, so dass die Qualität der Lebensmittel länger erhalten bleibt. Dies wiederum ergibt Vorteile, da weniger Lebensmittel vor dem Verkauf bzw. beim Konsumenten verderben und so in verschiedener Hinsicht Ressourcen geschont werden. Darüber hinaus brauchen Lebensmitteln weniger oder gar keine Konservierungsstoffe zugesetzt werden. Üblicherweise enthält die aktive Komponente eine leicht oxidierbare organische Verbindung, daneben weitere Bestandteile wie Metallsalze als Katalysatoren oder auch Photoinitiatoren. Als oxidierbare Verbindung für diesen Zweck werden beispielsweise Polyoctenamere vorgeschlagen, siehe beispielsweise EP2017308A1, WO9407944A1, WO9407379A1 und WO9806779A1.

Die Herstellung von Polyoctenamer ist literaturbekannt, siehe beispielsweise US2013/172635, und sie folgt dem Prinzip der sogenannten Metathese-Polymerisation. Es ist ferner bekannt, dass Polyoctenamer, wie auch andere Metathese-Polymerisate, beginnend mit dem Monomer, einen Anteil von niedermolekularen cyclischen Verbindungen (Oligomere) enthalten (siehe A. Dräxler in Handbook of Elastomers, 2nd edition, 697-722, 2001). Diese Moleküle sind bis zu einem bestimmten Molekulargewicht relativ mobil, d.h. gehen in die Gasphase über und führen aufgrund ihrer Geruchsaktivität zu einem unvorteilhaften Geruch von Verpackungsmaterialien. Ferner sind sie aufgrund ihrer Polarität fettlöslich, so dass ein Übertreten in das verpackte Gut denkbar ist. Auf Grund dieser Eigenschaften besitzen die metathetisch hergestellten Polymere eine beschränkte Einsatzmöglichkeit in Verpackungsanwendungen, d.h. wichtige Anwendungsbereiche bleiben sogar verschlossen, speziell im Sinne einer Nutzung von Polyoctenameren als Bestandteil einer Verpackung, die eine "aktive Sauerstoffbarriere" enthält. Eine Extraktion von niedermolekularen cyclischen Verbindungen aus Polyoctenameren mit Aceton oder Isopropanol ist in der Literatur beschrieben, siehe A. Dräxler in Handbook of Elastomers, 2nd edition, 697-722, 2001. Auch die EP2017308A1 beschreibt entsprechende Extraktionen mit diversen Lösungsmitteln.

Die Ring-öffnende, metathetische Polymerisation (ROMP = Ring Opening Metathesis Polymerisation) von Cycloalkenen ist an sich bekannt (Olefine Metathesis and Metathesis Polymerization, K. J. Irvin, J. C. Mol, Academic Press 1997; Handbook of Metathesis, Vol. 1-3, R. H. Grubbs, Wiley-VCH 2003). Diese Reaktion wird durch eine Reihe von Übergangsmetallen bzw. deren Verbindungen katalysiert, wobei oft ein Co-Katalysator eingesetzt wird, der zusammen mit dem Übergangsmetall bzw. der zugesetzten Übergangsmetallverbindung in einer Reaktion die katalytisch aktive Übergangsmetall-Spezies bildet. Als Co-Katalysatoren eigenen sich v. a. Aluminium- und Zinn-organyle.

Andere Katalysatorsysteme basieren auf definierten Übergangsmetallkomplexen. Zu den bekanntesten Verbindungen gehören Komplexe auf Basis von Ruthenium (Weskamp, T., Kohl, F. J., Herrmann, W. A. J. Organomet. Chem. 1999, 582, 362-365; Weskamp, T., Kohl, F. J., Hieringer, W., Gleich, D., Hermann, W. A. Angew. Chem. Int. Ed. 1999, 38, 2416-2419; Nguyen, S. T., Johnson, L. W., Grubbs, R. H., Ziller, J. W., J. Am. Chem. Soc. 1992, 114, 3974-3975; Bielawski, C. W., Grubbs, R. H., Angew. Chem. Int. Ed. 2000, 39, 2903-2906). Ein Nachteil besteht hier allerdings in ihrem hohen Preis und vor allem in der schwierigen Abtrennung vom Reaktionsprodukt. Reste an Ruthenium führen zu einer oft nicht zu akzeptierenden Färbung des Produktes. Das Polymer muss in diesen Fällen durch aufwändige Verfahren, wie z.B. Umfällen, gereinigt werden, was einer ökonomischen Herstellung entgegensteht.

Die Eigenschaften des resultierenden Polymers können über Parameter wie Temperatur, Konzentration an Monomer, Katalysatorkonzentration und Reaktionszeit eingestellt werden. Das Molekulargewicht lässt sich über den Zusatz von Reglern steuern, deren Aufgabe der Kettenabbruch der wachsenden Kette ist. Da es sich um einen statistischen Prozess handelt, verhält sich das Molekulargewicht in erster Näherung reziprok zur Konzentration an Regler. Eine Verbreiterung der Molekulargewichtsverteilung als Folge der Sekundärmetathese (Kettenübertragung bzw. "backbiting") ist hier nicht berücksichtigt. So lässt sich durch Zugabe von Reglern zwar das gewichtsmittlere Molekulargewicht, nicht aber die Breite der Molekulargewichtsverteilung beeinflussen. Es kommt im weiteren Verlauf der Reaktion zu einer Sekundärmetathese, bei der an dem aktiven Ende einer wachsenden Kette nicht ein weiteres Monomermolekül anlagert, sondern eine bereits bestehende Polymerkette. Das Ergebnis ist eine Kettenübertragung, wodurch die Uneinheitlichkeit bzw. Polydispersität (ausgedrückt als $(M_w/M_n)$-1 bzw. $M_w/M_n$) zunimmt. Eine weitere Beobachtung bei fortschreitender Reaktion ist die Verschiebung des cis-/trans-Verhältnisses zugunsten der trans-Konfiguration. Hierbei handelt es sich um einen Effekt, der sich ebenfalls auf die Sekundärmetathese zurückführen lässt. Um bestimmte Eigenschaften im Polymer einzustellen, bedarf es also der genauen Steuerung verschiedenster Verfahrensparameter.

Die Polymerisation von Cycloalkenen durch ROMP stellt ein wichtiges Verfahren zur Herstellung von Polyalkenameren dar. Ein Beispiel hierfür ist die Polymerisation von Cycloocten zu Polyoctenamer (bspw. VESTENAMER® der Firma Evonik Industries, DE). In der Regel wird das Polyalkenamer als Feststoff eingesetzt; für manche Anwendungen ist es allerdings erforderlich, dass das Polymer in einem bei Raumtemperatur flüssigen Zustand vorliegt. Eine wichtige Anwendung für Polyalkenamere ist der Einsatz in Verpackungen, beispielsweise in Verpackungsfolien, um die Barriereeigenschaften der Folie insbesondere bezüglich Sauerstoff aber auch anderer Substanzen, beispielsweise $CO_2$ o-der Wasser, zu verbessern. Insbesondere werden die Barriere-Eigenschaften durch die chemische Bindung von Sauerstoff durch das Polyalkenamer verbessert (aktive Barrierewirkung). Dabei wird dem Polyalkenamer in der Regel eine Übergangsmetallverbindung zugegeben, die die Reaktion des Polyalkenamers mit Sauerstoff beschleunigt (EP2017308A1).

Bei der Polymerisierung der Cycloalkene verbleiben Monomere und Oligomere des Monomers im erhaltenen Produktgemisch. Untersuchungen haben gezeigt, dass insbesondere diese Verbindungen eine erhöhte Geruchsaktivität aufweisen. Mehrere Autoren berichten, dass die Geruchsaktivität unter anderem mit der molaren Masse in Zusammenhang steht. Derartige Geruchsstoffe (Odor Active Organic Compounds, OVOC) weisen je nach Quelle Molmassen von nicht mehr als 350 g/mol oder weniger als 300 g/mol auf, um hinreichend flüchtig und als Geruch wahrnehmbar zu sein (M. Schlegelmilch, Geruchsmanagement: Methoden zur Bewertung und Verminderung von Geruchsemissionen,Hamburger Berichte 32 der Technischen Universität Hamburg-Harburg, Verlag Abfall aktuell 2009, ISBN 978-3-9810064-9-0; M. Schön, R. Hübner, Geruch - Messung und Beseitigung, Vogel Verlag Würzburg, 1. Auflage 1996, ISBN 3-8023-1561-8; Umweltbundesamt, Innenraumlufthygiene-Kommission des Umweltbundesamtes, Leitfaden für die Innenraumhygiene in Schulgebäuden, Seite 47, 2008; G. Scharfenberger, Papier + Kunststoff-Verarbeiter 10, 1990).

Es stellte sich nun die Aufgabe, ein Verfahren zur Herstellung Polyalkenamer-haltiger Zusammensetzungen zur Verfügung zu stellen, das in Produkten mit verringerter Geruchsaktivität resultiert. Im Vergleich zu den Methoden des Standes der Technik sollten Polymere mit einem geeigneten reduzierten Monomeren- und Oligomerengehalt erhalten werden. Hierbei sollten insbesondere Zusammensetzungen mit höherer Reinheit erhalten werden. Dazu sollten Monomere und Oligomere nicht nur bis zu einer molaren Masse von 450 g/mol abgetrennt, sondern auch Oligomere bis 1000 g/mol reduziert werden können. Das Verfahren sollte automatisierbar betrieben werden können. Darüber hinaus sollten die Polyalkenamer-haltigen Zusammensetzungen einer geringeren thermischen Belastung ausgesetzt werden.

Die Polyalkenamer-Verbindungen sollten eine mindestens gleichbleibende aktive Barrierewirkung (beispielsweise gleichbleibende Wirkung bei der chemischen Bindung von Sauerstoff) aufweisen. Dadurch sollte eine Verwendung im Lebensmittelbereich gewährleistet werden.

Die Aufgabe wurde dadurch gelöst, dass in das Verfahren eine Diafiltration aufgenommen wurde.

Die Aufgabe wurde demgemäß gelöst durch ein Verfahren zur Herstellung einer Polyalkenamer-haltigen Zusammensetzung, umfassend die Schritte:

> a) Umsetzen mindestens eines Cycloalkens durch ringöffnende, metathetische Polymerisation unter Erhalt einer Polyalkenamer-haltigen Produktmischung, und
> b) Aufarbeiten der Produktmischung zur Entfernung der Monomere und der Oligomere der Cycloalkene unter Erhalt der Polyalkenamer-haltigen Zusammensetzung,

wobei das Entfernen in Schritt b) durch eine Diafiltration (Membranfiltration mit Verdünnung oder Waschung) erfolgt.

Durch das erfindungsgemäße Verfahren ist es nun möglich, sowohl Monomere als auch Oligomere der Cycloalkene abzutrennen, deren molare Masse über 450 g/mol liegt. Gegenüber den Fällverfahren des Standes der Technik bietet die Diafiltration weiterhin den Vorteil, dass insgesamt weniger Lösemittel eingesetzt werden, das Lösemittel deutlich einfacher rezykliert werden kann und dadurch wieder einsetzbar ist. Zudem erfolgt eine geringe thermische Belastung für die polymere Zusammensetzung.

Die Diafiltration soll insbesondere mit einer optisch klaren Lösung erfolgen. Sofern vor Durchführung der Diafiltration ein Niederschlag oder eine Trübung erkennbar sein sollte, kann dies durch Abdekantieren oder durch übliche Filtrationsmethoden wie beispielsweise Papier-, Glas-, Metall-, Kunststoff-, Keramik- oder Porzellanfilter abgetrennt werden.

Die Diafiltration wird im Sinne der Erfindung verwendet als Sammelbegriff für Membranfiltrationen, in der die Vorlage beispielsweise als Feedstrom, Kreislauf oder Retentatstrom mit Lösemittel verdünnt wird, so dass die niedermolekulare Substanzen ausgewaschen werden können (M. Mulder, Basic Principles of Membrane Technology, 2nd Ed., 1996, Seite 491; A. Basile, S. P. Nunes, Membranes for industrial microfiltration and ultrafiltration, Woodhead Publishing Ltd., 2011, Seite 661). Eine geeignete Membran für den Zweck der Abreicherung aller niedermolekularen Monomeren- und Oligomerenbestandteile bis 1000 g/mol sollte im Permeat einen möglichst hohen Anteil dieser Verbindungen aufweisen. Gleichzeitig sollte die geeignete Membran sehr niedrigen Anteil für die Hauptfraktion der Polyalkenamere mit molaren Massen über 25000 g/mol zeigen, um wesentliche Produktverluste dieser Produkte (Hauptfraktion) zu vermeiden.

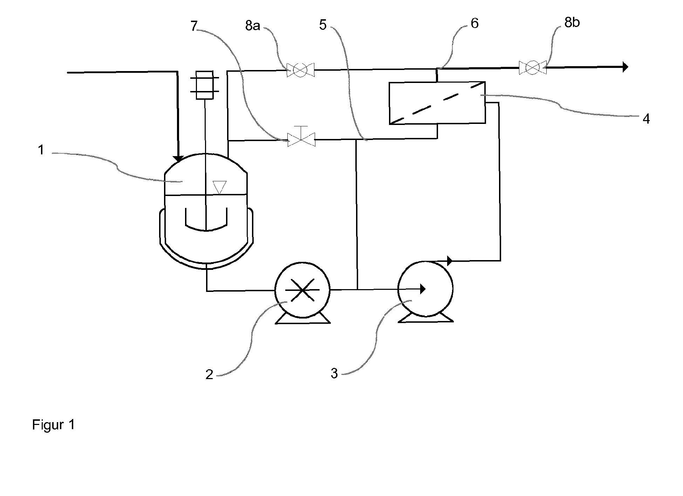

In Figur 1 ist eine Membrananlage in Form einer Cross-Flow Filtration exemplarisch dargestellt. Die zu bearbeitende Lösung wird in einem Feedbehälter 1 vorgelegt und über eine Hochdruckpumpe 2 verdichtet in den Kreislauf gegeben und über eine Umlaufpumpe 3 über die Membran überstömt. Der Druck wird über einen Vordruckregler 7 eingestellt. Über das Membranmodul (Membranzelle) 4 erfolgt die Trennung in Retentat 5 und Permeat 6. Retentat und Permeat können über verschiedene Verschaltungen, die beispielsweise über die Kugelhähne 8a und 8b gesteuert werden können, in den Feedbehälter zurückgeführt oder abgetrennt werden.

Typische molekulare Trenngrenzen der Ultrafiltrationsmembran, bei der 90 % der Moleküle einer bestimmten Molmasse zurückgehalten werden, liegen zwischen 1000 bis 100000 g/mol (T. Melin, R. Rautenbach, Membranverfahren: Grundlagen der Modul- und Anlagenauslegung, 3rd ed., Springer 2007, S. 313). Die Trenngrenze der Nanofiltrationsmembranen liegt zwischen 100 und 2000 g/mol (T. Melin, R. Rautenbach, Membranverfahren: Grundlagen der Modul- und Anlagenauslegung, 3rd ed., Springer 2007, S. 286, Diagramm). Demnach kann eine geeignete Membran Nano- oder Ultrafiltrationsmembran sein. Eine geeignete Membran mit gewünschter Trenneigenschaft ist im verwendeten Lösemittel oder Lösemittelgemisch stabil.

Das Membranelement weist vorzugsweise eine Membran auf, die mit einer Trennschicht aus Polymer, Glas, Metall, Keramik oder deren Gemischen hergestellt wird.

Geeignete anorganische Membranen werden ausgewählt aus porösen metallischen Materialien, Keramikmembranen oder Polymerkeramikmembranen, welche jeweils aus Aluminiumoxid, Titaniumdioxid, Zirkondioxid, Siliciumdioxid, Titaniumnitrit, Siliziumcarbid oder deren Mischungen und Modifikationen ausgewählt sein könne. Derartige Keramikmembranen werden beispielsweise von Inopor GmbH, PALL Corporation oder TAMI Industries angeboten. Ein Überblick über die Anbieter ist in R. Mallada, M, Inorganic Membranes: Synthesis, Characterization and Applications, Elsevier, 2008, S. 182, Tabelle 6.1, gegeben. Wegen des höheren Verhältnisses der aktiven Membranfläche zum Anlagevolumen sind Membranen in Form von Spiralwickelmodulen der Polymermembranen besonders bevorzugt.

Bevorzugt sind lösemittelstabile-Polymermembranen, wie sie beispielsweise in US 2012/0123079, WO 2010/142979, US 2012/0279922 oder EP 0943645B1 beschrieben werden.

Geeignete Membrantrennschichten sind zum Beispiel in WO 2010/142979, US 2012/0279922 oder EP 0943645B1 beschrieben. Geeignete Polymere sind insbesondere für organische Lösemittel geeignet. Die Membrantrennschichten werden vorzugsweise ausgewählt aus Polydimethysiloxanen (PDMS) oder deren Modifikationen (insbesondere Acrylat-Modifikationen), Polyacrylonitrilen (PAN), Polyimiden (PI), Polyetheretherketonen (PEEK), Polyvinylidenfluoriden (PVDF), Polyamiden (PA), Polyamidimiden (PAD), Polyethersulfonen (PES), Polybenzimidazolen (PBI), sulfonierte Polyetheretherketonen (SPEEK), Polyethylenen (PE) und Polypropylenen (PP). Weniger bevorzugt sind Membranen, die für wässrige optimiert sind. Hierzu zählen meist Polymere wie Celluloseacetat (CA), Polyethersulfone (PES) und Polysulfone (PS).

Die Einstellung der Parameter wie Auswahl des Materials der Membrantrennschicht, Temperatur, Druck und Membranoberfläche können vom Fachmann durch geeignete Vorversuche vorgenommen werden. Vorhersagemodelle für die Performance der eingesetzten Membranen existieren derzeit noch nicht.

Mit der Diafiltration lassen sich Monomere und Oligomere aus der Produktmischung entfernen (Membranfiltration mit Verdünnung, Waschung). Das Retentat enthält die Polyalkenamer-haltige Zusammensetzung und ist von Oligomeren abgereichert, wohingegen das Permeat die Monomere und Oligomere überwiegend enthält.

In einer bevorzugten Ausführungsform der Erfindung wird das Waschlösemittel rezykliert. Hierzu wird das Permeat der Waschung, welches Monomere und Oligomere enthält, einem weiteren Prozessschritt unterzogen. Hierzu kann das Permeat destilliert oder einer weiteren Membranfiltration unterzogen werden. Das Membranelement wird bei dieser weiteren Membranfiltration derart ausgewählt, dass die Monomere und Oligomere von Lösemittel abgetrennt werden können. Das Lösemittel kann anschließend rückgeführt und der Umsetzung (Schritt a) oder der Aufarbeitung (Schritt b) zugeführt werden.

Oligomere im Sinne dieser Erfindung sind Oligomere des eingesetzten Cycloalkens, welche eine molare Masse von maximal 1000 g/mol aufweisen. Die Messung erfolgt in Anlehnung an DIN 55672-1 (siehe unten).

Es ist bevorzugt, dass die Summe aus Monomeren und Oligomeren (Verunreinigungen) in der Polyalkenamerhaltigen Zusammensetzung weniger als 20000 ppm, bezogen auf das Gesamtgewicht der Zusammensetzung, beträgt. Besonders bevorzugt sind weniger als 10000 ppm, ganz besonders bevorzugt weniger als 2500 ppm und insbesondere weniger als 1000 ppm an Verunreinigungen enthalten. Derartige Ergebnisse kann der Fachmann durch Variation der Dauer der Diafiltration (insbes. Austauschfaktor des Lösungsmittels auf Retentat-Seite) und der Auswahl der Membran mit geeigneten Trennschicht einstellen.

Die Diafiltration wird bevorzugt in Form einer Cross-Flow Filtration durchgeführt, in der sich keine Polymerschicht an der Membran absetzt. Dieses wird durch eine ausreichend hohe Überströmungsgeschwindigkeit der Membran gewährleistet. Dabei ist die "Feed-and-Bleed"-Verschaltung der Pumpen und Membran bevorzugt. Hierzu wird die Polymerfeedlösung mittels einer Hochdruckpumpe in einen Membrankreislauf befördert, in dem sich eine Umlaufpumpe befindet (vgl. T. Melin, R. Rautenbach, Membranverfahren: Grundlagen der Modul- und Anlagenauslegung, 3rd ed., Springer 2010, S. 2007). Durch die Membran wird der Permeatstrom abgenommen und aus dem Kreislauf wird Retentatstrom (auch Konzentratstrom genannt) abgenommen. Zugabe von Waschlösemittel (Lösemittel, mit dem die Diafiltration durchgeführt wird) kann beispielsweise im Kreislauf, Retent- oder Feedstrom oder im Feedbehälter stattfinden.

Die Mono- und Oligomere sowie Nebenprodukte wie Alkan-Derivate werden folgendermaßen bestimmt:

Retentat
Probenvorbereitung: Jeweils etwa 1 mg Probe werden in ein leeres TDS-Röhrchen eingewogen.

Ansatz der externen Standardlösung: 50 mg Hexadecan wird in einen 100-mL-Messkolben genau eingewogen, mit Methanol bis zur Marke aufgefüllt und durch Schütteln homogenisiert. Von dieser Lösung werden 2 $\mu$L (entspricht ca. 1 $\mu$g) auf ein Tenax-Röhrchen gegeben. Dieser externe Standard wird zu Beginn und am Ende der Sequenz jeweils einmal gemessen.

Die Bestimmung erfolgte mittels Gaschromatograph Agilent 6890 mit ChemStation-Software; Parameter: Trennsäule Rtx-5; Länge: 60 m; Innendurchmesser: 250 $\mu$m; Filmdicke: 0,25 $\mu$m; Trägergas: Helium; Säulenvordruck: 186 kPa; Ofentemperatur: 50°C- 10°C/min - 320°C (23 min); Split: 30:1; Detektortemperatur: 280 °C (Thermal Aux). Die Thermodesorptionseinheit ist folgendermaßen eingestellt worden: Gerstel TDSA; TDS-Ofen (Initialtemperatur: 20°C; Equilibrierzeit: 1 min; Initialzeit: 0,01 min; Aufheizrate: 60°C/min; Endtemperatur: 280 °C; Haltezeit: 20 min); Kaltaufgabesystem (Initialtemperatur: -150 °C (mit Flüssig-$N_2$-Kühlung); Equilibrierzeit: 0,05 min; Initialzeit: 0,01 min; Aufheizrate: 12 °C/s; Endtemperatur: 300°C; Haltezeit: 5 min). Weiterhin wurden eingestellt Transfertemperatur: 330 °C; Desorptionsmodus: Splitless; Probenmodus: Röhrchen entfernen (Remove Tube); masselselektiver Detektor: Scan-Moduls 25 - 500 m/z, solvent delay 0 min.

Permeat

Ansatz der externen Standardlösung: 100 mg Hexadecan wird in einen 100-mL-Messkolben genau eingewogen, mit n-Hexan bis zur Marke aufgefüllt und durch Schütteln homogenisiert. Von dieser Lösung werden 3 $\mu$L mit einem Probengeber in den Split/Splitless Injektor des GCMS injiziert. Der Standard hat eine Konzentration von 1000 mg/L und wird zu Beginn und am Ende der Sequenz jeweils einmal gemessen. Als Blindwert dient n-Hexan.

Die Bestimmung erfolgte ohne Probenvorbereitung mittels Gaschromatograph Agilent 7890 mit ChemStation-Software; Parameter: Trennsäule Rtx-5; Länge: 60 m; Innendurchmesser: 250 $\mu$m; Filmdicke: 0,25 $\mu$m; Trägergas: Helium; Säulenvordruck: 203 kPa; Ofentemperatur: 50°C- 10°C/min - 320°C (23 min); Split: 30:1; Detektortemperatur: 300 °C (Thermal Aux); massenselektiver Detektor Agilent 5975, Scan-Moduls 25 - 500 m/z, solvent delay 0 min.

Die Umsetzung des oder der Cycloalkene kann ohne Lösemittel betrieben werden. Alternativ kann die Reaktion in mindestens einem Lösemittel durchgeführt werden. Geeignete Lösemittel sind beispielsweise gesättigte aliphatische Kohlenwasserstoffe wie Hexan, Heptan, Octan, Nonan, Decan, Dodecan, Cyclohexan, Cycloheptan oder Cyclooctan; aromatische Kohlenwasserstoffe wie Benzol, Toluol, Xylol oder Mesitylen; halogenierte Kohlenwasserstoffe wie Chlormethan, Dichlormethan, Chloroform oder Tetrachlorkohlenstoff; Ether wie Diethylether, Tetrahydrofuran oder 1,4-Dioxan, Ketone wie Aceton oder Methylethylketon, Ester wie Ethylacetat sowie Mischungen der zuvor genannten Lösemittel. Besonders bevorzugt wird das Lösemittel für die Reaktion ausgewählt aus der Gruppe bestehend aus aliphatischen und aromatischen Kohlenwasserstoffen, hier insbesondere bevorzugt Alkane mit fünf bis zwölf Kohlenstoffatomen, noch mehr bevorzugt fünf bis acht Kohlenstoffatome, und Toluol. Des Weiteren sind bevorzugt ausgewählt Tetrahydrofuran, Methylethylketon, Chlormethan, Dichlormethan, Chloroform oder Mischungen daraus. Hexan oder Toluol sind ganz besonders bevorzugt, wobei insbesondere Hexan ausgewählt wird. Der Gehalt an Lösemittel kann beispielsweise auf einen Wert von 20 bis 60 Gew.-%, vorzugsweise von 40 bis 60 Gew.-%, bezogen auf das Gesamtgewicht aus Cycloalken und Lösemittel, eingestellt werden.

Bei der Wahl der Lösemittel für die ringöffnende Metathese-Reaktion ist zu beachten, dass das Lösemittel nicht den Katalysator bzw. die katalytisch aktive Spezies deaktivieren sollte. Dies kann der Fachmann durch einfache Versuche oder durch Studium der Literatur erkennen. Bei Katalysatorsystemen, die Aluminiumorganyle enthalten, sind insbesondere aromatische oder aliphatische Kohlenwasserstoffe geeignet, die keine Heteroatome tragen.

In einer weiteren Ausführungsform der Erfindung kann die Polyalkenamer-haltige Zusammensetzung einen Stabilisator enthalten. Dieser kann deren Lagerstabilität und/oder Verarbeitungsstabilität erhöhen. Geeignete Stabilisatoren können ausgewählt werden aus der Gruppe der sterisch gehinderten Phenole, beispielsweise 2,5-Di-tert-butylhydrochinon, 2,6-Ditert-butyl-p-cresol, 4,4'-Thiobis-(6-tert-butylphenol), 2,2'-Methylen-bis-(4-methyl-6-tertbutylphenol), Octadecyl-3-(3',5'-di tert-butyl-4'-hydroxyphenyl)propionat, 4,4'-Thiobis-(6-tert-butylphenol), 2-tert-Butyl-6-(3-tert-butyl-2-hydroxy-5-methyl-benzyl)-4-methylphenylacrylat, 2,6-Di-(tert-butyl)-4-methylphenol (BHT), 2,2-Methylenbis-(6-tert-butyl-p-cresol), aus der Gruppe der organischen Phosphite, beispielsweise Triphenylphosphit, tris-(Nonylphenyl)phosphit, der Gruppe der organische Thioverbindungen, beispielsweise Dilaurylthiodipropionat, Pentaerythritoltetrakis(3-laurylthiopropionat) und Ascorbinsäure und Mischungen daraus.

Der Stabilisator kann in einem Bereich von 5 bis 7500 ppm, vorzugsweise 25 bis 750 ppm, enthalten sein, jeweils bezogen auf das Gewicht des Polyoctenamers. Zugesetzt werden kann der Stabilisator gemäß einem der folgenden Schritte:

Der Stabilisator kann vor, während und nach der Metathese-Polymerisation zugesetzt werden. Der Stabilisator kann in die Schmelze des Polymers eingearbeitet werden, beispielsweise über eine Compoundierung in einem Extruder. Dabei kann der Stabilisator sowohl direkt dosiert als auch über ein Masterbatch zugegeben werden. Dies kann auch erst im Zuge einer Weiterverarbeitung zu einem Blend mit einem weiteren Polymer und / oder der Herstellung von Formkörpern, beispielsweise Folien, geschehen. Eine andere Möglichkeit besteht darin, den Stabilisator in einem geeigneten Lösemittel zu lösen und auf die Partikel des Polyalkenamers aufzubringen. Anschließend wird das Lösungsmittel entfernt, beispielsweise durch einen Trocknungsschritt, bei dem erhöhte Temperatur und / oder reduzierter Druck eingesetzt werden. Der Stabilisator verbleibt dann auf der Oberfläche der Partikel und / oder zieht während des Trocknens in die Partikel ein. Eine andere Möglichkeit besteht darin, den Stabilisator als Pulverbeschichtung auf die Partikel aufzubringen. Darüber hinaus besteht, die Möglichkeit, den Stabilisator in eine Lösung der Polyalkenamer-haltigen Zusammensetzung zuzugeben.

Es ist auch möglich, eine Mischung herzustellen, bei der Polyalkenamer-Partikel, die einen Stabilisator in höherer Konzentration beinhalten, neben Polyalkenamer-Partikeln vorliegen, die keinen Stabilisator oder eine geringere Konzentration an Stabilisator enthalten.

Weiterhin kann die Polyalkenamer-Zusammensetzung Farbstoffe (lösliche Farbmittel) enthalten.

Geeignete Lösemittel für die Waschung (Waschlösemittel) können ausgewählt werden aus den Lösemitteln, die für die Umsetzung der Cycloalkene genannt sind, wobei Alkane mit fünf bis zwölf Kohlenstoffatomen bevorzugt, fünf bis acht Kohlenstoffatome besonders bevorzugt und Hexan ganz besonders bevorzugt sind. Sofern ein Lösemittel für die genannte Umsetzung der Cycloalkene eingesetzt wird, kann das gleiche Lösemittel oder ein anderes Lösemittel für die Aufarbeitung der Produktmischung eingesetzt werden. Sofern sich die Produktmischung nach der Umsetzung (Schritt a) noch in einem Lösemittel befinden sollte, ist es bevorzugt, sie aus wirtschaftlichen Gründen in diesem Lösemittel zu belassen und die Diafiltration in diesem Lösemittel durchzuführen. Hierbei verbleibt das Polyalkenamer während der Aufreinigung in Lösung, wodurch es sich leichter verarbeiten lässt und keine Verluste durch Umkristallisation oder Filtration oder sonstige Prozesse der Produktisolierung, z.B. Abziehen des Lösungsmittels oder Vakuumtrocknung, entstehen. Somit sind deutlich weniger manuelle Tätigkeiten notwendig.

Vor Durchführung der Diafiltration kann die Lösung der Polyalkenamer-haltigen Produktmischung verdünnt werden, wobei vorzugsweise das gleiche Lösemittel bzw. das gleiche Lösemittelgemisch zugegeben wird. Hierdurch kann eine für die Diafiltration geeignete Konzentration bzw. Viskosität der Polymerlösung eingestellt werden. Alternativ kann die Temperatur der Lösung erhöht werden, um die Viskosität zu verringern. Hierbei werden Temperaturen unterhalb der Siedepunkte der eingesetzten Lösemittel gewählt. Gegenüber der Verdünnung hat die Temperaturerhöhung den Vorteil, dass die Diafiltration mit höheren Konzentrationen durchgeführt werden kann. Somit wird eine höhere Ausbeute pro Zeit erhalten. Die beiden Methoden können miteinander kombiniert werden.

Das Lösungsmittel(-gemisch), das für die Diafiltration Verwendung findet, kann mit einem Stabilisator versetzt werden, um während der Diafiltration auf der Retentatseite eine gleichbleibende Stabilisatorkonzentration zu erhalten. Dies kann erforderlich sein, falls der Stabilisator durch die Diafiltration abgereichert wird. Dieser Zusatz ist unabhängig davon, ob die Lösung der Polyalkenamer-haltigen Zusammensetzung bereits einen Stabilisator enthält und in welcher Konzentration er dort vorliegt.

Der Gehalt an Lösemittel ist auf die Diafiltration einzustellen, wobei der Fachmann den Gehalt für eine optimale Trennung durch einfache Vorversuche ermitteln kann. Ein Bespiel der Einflussparameter und der Optimierung einen Diafiltrationsverfahrens ist in Application Note - Millipore - A Hands-On Guide to Ultrafiltration/Diafiltration Optimization using Pellicon® Cassettes vorgestellt.

In einer alternativen Ausführungsform kann die Produktmischung aus Schritt a, beispielsweise für den Transport, in die feste Form überführt werden. Hierzu kann das Lösemittel nach den unten genannten und dem Fachmann bekannten Verfahren entfernt werden. Im Anschluss kann die Produktmischung zu Partikeln granuliert oder pulverisiert werden. Bevorzugt ist die mittlere Masse der Partikel kleiner als 100 g / 1000, besonders bevorzugt kleiner als 10 g / 1000 und insbesondere bevorzugt kleiner als 1 g / 1000. Hierbei sind mittlere Massen bis zu einer maximalen Größe von 1000 g / 1000 umfasst. Zur anschließenden Durchführung der Diafiltration wird das Material wieder in Lösung gebracht.

Zur Bestimmung der mittleren Masse werden ca. 2 - 3 g der Partikel auf eine saubere Unterlage, z. B. ein Blatt Papier, gegeben. Anschließend werden alle Körner dieser Probe ausgezählt und in eine Petrischale überführt; Spieße >1,0 cm Länge oder Granulatketten >1,0 cm werden dabei aussortiert (verworfen) und hier nicht bewertet. Die Anzahl der Granulatkörner wird notiert; sie muss min.150 betragen. Anschließend werden die Granulatkörner auf 0,1 g genau ausgewogen und auf 1000 Granalien bezogen. Wird die Anzahl von 150 Granulatkörnern unterschritten, muss eine neue, entsprechend größere Partikelmenge als Probe herangezogen werden.

In einer bevorzugten Ausführungsform des erfindungsgemäßen Verfahrens ist das Cycloalken ausgewählt aus der Gruppe bestehend aus Cyclobuten, Cyclopenten, Cyclohepten, Cycloocten, Cyclononen, Cyclodecen, Cyclododecen, Cyclooocta-1,5-dien, 1,5-Dimethylcyclooocta-1,5-dien, Cyclodecadien, Norbornadien, Cyclododeca-1,5,9-trien, Trimethylcyclododeca-1,5,9-trien, Norbornen (Bicyclo[2.2.1]hept-2-en), 5-(3'-Cyclohexenyl)-2-norbornen, 5-Ethyl-2-norbornen, 5-Vinyl-2-norbornen, 5-Ethyliden-2-norbornen, Dicyclopentadien und Mischungen davon. Besonders bevorzugt sind Cyclopenten, Cyclohepten, Cycloocten und Cyclododecen. Cycloocten ist auf Grund der Verfügbarkeit und Handhabbarkeit ein herausragendes Cycloalken. Es können mehrere Cycloalkene eingesetzt werden, so dass Copolymere des Polyalkenamers entstehen. Die Cycloalkene können substituiert sein mit Alkylgruppen, Arylgruppen, Alkoxygruppen, Carbonylgruppen, Alkoxycarbonylgruppen und/oder Halogenatomen.

Nach der Membrantrennung kann ein weiterer Zusatz von Stabilisator erfolgen, um zum Beispiel eventuelle Verluste aus der Diafiltration auszugleichen oder ein gewünschte Endkonzentration einzustellen.

Nach der Membranabtrennung kann das Lösemittel, in der die Polyalkenamer-haltige Zusammensetzung gelöst ist, entfernt werden. Dies kann beispielsweise durch Erhitzen oder Verringerung des Drucks, beispielsweise mittels Vakuum-Entgasung, vorgenommen werden. Alternativ oder zusätzlich kann eine Trocknung, beispielsweise unter vermindertem Druck und/ oder erhöhter Temperatur, durchgeführt werden, um das Lösemittel zu entfernen. Der erhaltene Feststoff kann zu Partikeln granuliert, beispielsweise durch Stranggranulierung oder Unterwassergranulierung, oder pulverisiert werden, beispielsweise durch Sprühtrocknung oder Vermahlung.

Das erfindungsgemäße Verfahren kann kontinuierlich oder diskontinuierlich durchgeführt werden.

Das Polyoctenamer weist vorzugsweise ein gewichtsmittleres Molekulargewicht (Mw) von 1500 g/mol bis 500000 g/mol, bevorzugt von 2000 g/mol bis 500000 g/mol, besonders bevorzugt von 5000 bis 250000 g/mol, ganz besonders bevorzugt von 10000 bis 200000 und insbesondere von 20000 bis 200000 auf. Das Molekulargewicht wird bestimmt mittels GPC gegen Styrolstandard. Die Messung erfolgt in Anlehnung an DIN 55672-1.

Probenvorbereitung: Die Proben werden mit einem Gehalt von 5 g/L in Tetrahydrofuran bei Raumtemperatur gelöst. Sie werden vor der Injektion in das GPC-System filtriert (Spritzenfilter 0,45 $\mu$m). Die Messung erfolgt bei Raumtemperatur.

Säulenkombination:

1 x 5 cm, 5 $\mu$m, 100 A, (Styrol-Divinylbenzol-Copolymer)
1 x 30 cm, 5 $\mu$m, 50 A, (Styrol-Divinylbenzol-Copolymer)
1 x 30 cm, 5 $\mu$m, 1000 A, (Styrol-Divinylbenzol-Copolymer)
1 x 30 cm, 5 $\mu$m, 100000 A, (Styrol-Divinylbenzol-Copolymer)

Mobile Phase: Tetrahydrofuran reinst, stabilisiert

Flussrate: 1 mL/min

Detektion: Brechungsindex-Detektor

Kalibrierung: Polystyrol

Das gewünschte Molgewicht kann beispielsweise in Gegenwart mindestens eines Reglers eingestellt werden, der den Kettenaufbau abbrechen lässt. Geeignete Regler sind beispielsweise acyclische Alkene mit einer oder mehreren nichtkonjugierten Doppelbindungen, die end- oder innenständig liegen können und die vorzugsweise keine Substituenten tragen. Solche Verbindungen sind z.B. Pent-1-en, Hex-1-en, Hept-1-en, Oct-1-en oder Pent-2-en. Des Weiteren können cyclische Verbindungen eingesetzt werden, die in ihrer Seitenkette eine Doppelbindung aufweisen, wie z.B. Vinylcyclohexen.

Das cis/trans-Verhältnis der Cycloalkenamere kann durch dem Fachmann geläufige Methoden eingestellt werden. Beispielsweise ist das Verhältnis abhängig von Katalysatoren, Lösemitteln, Rührintensität oder Temperatur oder Reaktionszeit. Vorzugsweise beträgt der trans-Gehalt mindestens 55%. Das cis-/trans-Verhältnis wird mittels $^1$HNMR in Deuterochloroform ermittelt.

Die Umsetzung des Cycloalkens kann in Gegenwart mindestens eines Katalysators erfolgen. Geeignete Katalysatoren sind beispielsweise Übergangsmetallhalogenide, die zusammen mit einer Organometallverbindung als Co-Katalysator die für die Polymerisation katalytisch aktive Spezies. Das Metall der Organometallverbindung unterscheidet sich dabei von dem Übergangsmetall des Halogenids. Alternativ können Übergangsmetall-Carben-Komplexe eingesetzt werden. Als Übergangsmetalle können Metalle der Gruppen 4 bis 8 wie beispielsweise Molybdän, Wolfram, Vanadium, Titan oder Ruthenium in Betracht kommen. Metalle der Organometallverbindung sind beispielsweise Aluminium, Lithium, Zinn, Natrium, Magnesium oder Zink. Geeignete Katalysatoren sowie ihre einzusetzenden Mengen werden beispielsweise in EP-A-2017308 aufgeführt.

Vorzugsweise wird ein Katalysatorsystem eingesetzt, das mindestens ein Alkylaluminiumchlorid, Wolframhexachlorid oder Mischungen enthält. Geeignete Alkylaluminiumchloride sind Ethylaluminiumdichlorid (EtAlCl$_2$) und Ethylaluminiumsesquichlorid, die auch in Mischungen eingesetzt werden können. Ein bevorzugtes Katalysatorsystem enthält Wolframhexachlorid und Ethylaluminiumdichlorid oder, in einer besonders bevorzugten Ausführungsform, besteht aus diesen beiden Verbindungen. Das Massenverhältnis der Aluminiumchloride zu Wolframhexachlorid ist bevorzugt eins bis sechs. Besonders bevorzugt ist ein Verhältnis von zwei bis fünf. Zur Aktivierung des Katalysators können acide Verbindungen wie Alkohole eingesetzt werden.

Das Wolframhexachlorid kann in einem Bereich von 0,1 bis 0,04 mol-%, besonders bevorzugt von 0,1 bis 0,01 mol-%, bezogen auf das eingesetzte Cycloalken, eingesetzt werden. Die Alkylalummiumchloride liegen vorzugsweise in einem Bereich von 0,2 bis 0,08 mol-%, bevorzugt 0,2 bis 0,02 mol-%, bezogen auf Cycloalken.

Die Umsetzung der Cycloalkene kann sowohl isotherm als auch adiabatisch betrieben werden. Die Temperatur liegt vorzugsweise in einem Bereich zwischen -20 und 120 °C. Dies ist insbesondere abhängig von den eingesetzten Monomeren und einem eventuell vorhandenen Lösemittel. Eine besonders bevorzugte Temperatur liegt im Bereich von 10 bis 60 °C. Die Reaktion findet bevorzugt in einer Schutzgasatmosphäre statt. Bei adiabatischer Verfahrensführung kann die Temperatur über Parameter wie Katalysatormenge, Geschwindigkeit der Katalysatorzugabe, Zeitpunkt des Abbruchs der Reaktion etc. bestimmt werden. Hier liegt der bevorzugte Temperaturbereich bei 20 bis 50 °C.

Die Polymerisation kann nach Erreichen der gewünschten Reaktionszeit durch Inaktivierung des Katalysatorsystems beendet werden. Zu diesem Zweck kann z.B. eine geeignete Menge an CH-acider Verbindung zugesetzt werden. Hierzu eignen sich z.B. Alkohole wie Methanol, Ethanol, Propanol etc. als auch Carbonsäuren wie Essigsäure.

Ebenfalls Gegenstand der Erfindung ist die Verwendung mindestens einer erfindungsgemäßen Polyalkenamerhaltigen Zusammensetzung oder mindestens einer nach dem erfindungsgemäßen Verfahren erhaltenen Zusammensetzung in Verpackungsmaterialien, wobei die Verpackungsmaterialien vorzugsweise für Lebensmittel verwendet werden.

**Beispiele**

**A. Trennverhalten verschiedener Membranen**

Mit dem Versuch A sollte ermittelt werden, ob die eingesetzten Membranen die Monomere und Oligomere in das Permeat überführen und das Polymer im Retentat verbleibt.

I. Herstellung einer Lösung einer Polyalkenamer-haltigen Produktmischung

Als Polyalkenamer-haltige Produktmischung wurde Vestenamer® 8020 (Polyoctenamer) der Fa. Evonik, Deutschland, eingesetzt. Die eingesetzten Pellets dieses Produkts enthalten eine untergeordnete Menge an Cycloocten.

Herstellung einer Lösung (10 Gew.-%) einer Polyoctenamer-haltigen Produktmischung aus Pellets (Feedmischung):

| | |
|---|---|
| Irganox 1076 | 1,68 g |
| Vestenamer 8020 | 132 g |
| Hexan (techn.) | 1187 g |

Der Polymerisationsinhibitor (Irganox 1076) wurde zugegeben, um sicherzustellen, dass keine Polymerisation während der Filtration stattfindet. Die Lösung wurde unter Rückfluss durch sukzessive Zudosierung der Polyoctenamerpellets in kontinuierlich gerührtes 50 °C heißes Hexan hergestellt.

II. Durchführung der Membranfiltration

Die Membranfiltrationen wurden in Form einer Cross-Flow-Filtration durchgeführt. Die Membrananlage wies eine flache, rechteckige Membranzelle mit 20 cm Länge, 4 cm Breite und einer Kanalhöhe von 0,1 cm auf. Es wurden eingesetzt eine Nanofiltrationsmembran (ONF-2 der GMT Membrantechnik) und eine Ultrafiltrationsmembran (L-6 der GMT Ultrafiltrationsmembran). Der Permeatfluss wurde durch das Auswiegen des angefallenen Permeates in einer bestimmten Zeit ermittelt. Das ausgewogene Permeat wurde zur Feedlösung zurückgegeben.

Parameter der Membranfiltration 1 (Nanofiltrationsmembran ONF-2):

| | |
|---|---|
| Transmembrandruck: | 30 bar |
| Durchfluss im Kreislauf: | > 150 L/h |
| Temperatur im Kreislauf: | 49 ± 0,5 °C |
| Permeatfluss: | 21,43 kg/(m²·h) |

Parameter der Membranfiltration 2 (Ultrafiltrationsmembran L-6):

| | |
|---|---|
| Transmembrandruck: | 5 bar |
| Durchfluss im Kreislauf: | > 150 L/h |
| Temperatur im Kreislauf: | 49 ± 0,5 °C |
| Permeatfluss: | 18,68 kg/(m²·h) |

Parameter der Membranfiltration 3 (Ultrafiltrationsmembran L-6):

| | |
|---|---|
| Transmembrandruck: | 10 bar |
| Durchfluss im Kreislauf: | > 150 L/h |
| Temperatur im Kreislauf: | 49 ± 0,5 °C |
| Permeatfluss: | 19,88 kg/(m²·h) |

a) Konditionierung der Membran

Durch die Konditionierung sollten Fremdstoffe in der Membran und der Anlage entfernt werden. Dazu wurden 0,5 L Hexan eine Stunde lang bei niedrigem Druck im Kreisgefahren und vor dem Versuch abgelassen.

b) Membranfiltration der Produktmischung

Zu Beginn wurde ca. 1 L der Feedmischung in den Doppelmantelvorlagebehälter (Feedbehälter) mit Rührer gefüllt. Anschließend wurde dieser mittels einer Hochdruckpumpe im Rezirkulationskreislauf gepumpt (ca. 40 L/h). In diesem Kreislauf waren eine Zentrifugalpumpe und eine Belgleitheizung installiert. Der Kugelhahn 8a war geöffnet und der Kugelhahn 8b geschlossen. Der Teil des Feedstroms, welcher die Membran passierte (Permeatstrom), wurde zurück in den Feedbehälter geleitet; lediglich zur Probennahme wurde der Permeatstrom kurzzeitig umgeleitet (Kugelhahn 8b offen) und als Permeatprobe gesammelt. Der Teil, der nicht durch die Membran gelangte, wurde als Retentatstrom zurück in den Feedbehälter geleitet.
Nach Erreichung des konstanten Permeatflusses wurden Permeat- und Retentatproben genommen. Die Retentatprobe wurde direkt hinter dem Vordruckregler genommen und wies die gleiche Konzentration auf wie die Lösung in den Kreislauf auf der Druckseite der Membran. Die Permeatprobe wurde nahe an der Membranzelle gezogen. Beide Proben (Retentat und Permeat) wurden nahezu zeitgleich genommen.

III. Ergebnis

Zur Identifizierung der niedermolekularen Komponenten in den Proben erfolgten GCMS-Analysen über eine Direktinjektion mit einem Flüssig-Probengeber. Durch die Auswertung gegen einen externen Kalibrierstandard (1000 mg Hexadecan/mL) wurden die ausgewiesenen Substanzen als "Hexadecan-Equivalent" halbquantitativ bestimmt. Die Messmethode dient nur zur Abschätzung der Menge an flüchtigen Substanzen.

Tabelle 1: Membranfiltration 1 - Vergleich der Anteile an Oligomeren(in mg/kg Hexan) im Retentat und Permeat aus der Dampfphase (Membran ONF-2).

| | Retentat | Permeat | Permeat / Retentat |
|---|---|---|---|
| Cycloocten | | 3 | |
| Cyclooctan | 26 | 24 | 0,92 |
| Cycloocten, Dimer | 302 | 284 | 0,94 |
| Cycloocten, Trimer | 721 | 432 | 0,59 |

(fortgesetzt)

|  | Retentat | Permeat | Permeat / Retentat |
|---|---|---|---|
| Cycloocten, Tetramer |  | 170 |  |

Tabelle 2: Membranfiltration 2 - Vergleich der Anteile an Oligomeren(in mg/kg Hexan) im Retentat und Permeat aus der Dampfphase (Membran L-6, 5 bar).

|  | Retentat | Permeat | Permeat / Retentat |
|---|---|---|---|
| Cycloocten |  |  |  |
| Cyclooctan | 20 | 27 | 1,35 |
| Cycloocten, Dimer | 179 | 338 | 1,89 |
| Cycloocten, Trimer | 352 | 703 | 2,00 |
| Cycloocten, Tetramer |  | 588 |  |

Tabelle 3: Membranfiltration 3 - Vergleich der Anteile an Oligomeren(in mg/kg Hexan) im Retentat und Permeat aus der Dampfphase (Membran L-6, 10 bar).

|  | Retentat | Permeat | Permeat / Retentat |
|---|---|---|---|
| Cycloocten |  |  |  |
| Cyclooctan | 23 | 26 | 1,13 |
| Cycloocten, Dimer | 294 | 338 | 1,15 |
| Cycloocten, Trimer | 616 | 721 | 1,17 |
| Cycloocten, Tetramer |  | 573 |  |

In den Permeaten der drei Filtrationen sind Oligomere sowie das Cyclooctan nachweisbar. Insofern sind beide Membranen grundsätzlich geeignet, eine Abreicherung von Oligomeren durch Diafiltration vorzunehmen. Im Vergleich zu den Retentaten sind mittels Membran L-6 sogar höhere Anteile an Oligomeren und Cyclooctan nachweisbar. Eine Erhöhung des Drucks von 5 bar (Tabelle 2) auf 10 bar (Tabelle 3) führt zwar zu einer geringfügigen Verbesserung des Flusses. Allerdings treten unerwünschte Effekt auf: Im Permeat wurden - relativ zum Retentat - weniger Oligomere nachgewiesen. Insofern sind die optimalen Betriebsbedingungen für jeweilige Membran und Mischung vom Fachmann vorab abzustimmen.

Die Permeate wurden per GPC analysiert, um die Molmasseverteilung der Monomeren und Oligomeren, die durch die Membran passierten, zu erfassen (Bestimmungsmethode: siehe Beschreibung). Ein Vergleich mit der Molmasseverteilung der Mono- und Oligomere im eingesetzten Polyocten-haltigen Produktmischung gibt einen Aufschluss darüber, ob die Hauptfraktion des Polyalkenamers mit einer gewichtsmittleren Molmasse Mw > 25000 im Retentat verbleibt.

Tabelle 4: Anteile an Polymer in der ursprünglichen Feed-Lösung und den Permeaten

| Membran | Mn in g/mol | Mw in g/mol | Mp in g/mol | Polydispersität | Anteile < 1000 g/mol | Anteile < 25000 g/mol | Anteile > 25000 g/mol |
|---|---|---|---|---|---|---|---|
| Polyoctenamer | 9600 | 110900 | 81300 | 11,5 | 3,51 % | 10,46 % | 89,54 % |
| ONF-2 Permeat | 250 | 1800 | 270 | 7,1 | 95,09 % | 99,20 % | 0,80 % |
| L-6 Permeat 1 (5 bar) | 430 | 2200 | 810 | 5,2 | 71,75 % | 98,33 % | 1,67 % |

(fortgesetzt)

| Membran | Mn in g/mol | Mw in g/mol | Mp in g/mol | Polydispersität | Anteile < 1000 g/mol | Anteile < 25000 g/mol | Anteile > 25000 g/mol |
|---|---|---|---|---|---|---|---|
| L-6 Permeat 2 (10 bar) | 380 | 1200 | 810 | 3,2 | 78,87 % | 99,55 % | 0,45 % |
| Mn = zahlenmittleres Molekulargewicht Mw= gewichtsmittleres Molekulargewicht Mp = Molekulargewicht, Peakmaximum | | | | | | | |

Die "Anteile < 25000 g/mol" und "Anteile > 25000 g/mol" ergeben zusammen jeweils 100 %.

Die Untersuchung zeigt, dass der Anteil an Polymeren mit einer molaren Masse von über 25000 g/mol unter 2 % liegt. Insofern führt die Membranfiltration nicht nur zur Überführung der Monomere und Oligomere in das Permeat, sondern auch zu einer Abtrennung von der Polyalkenamer-haltigen Zusammensetzung, da die Zusammensetzung im Retentat verbleibt.

## B. Diafiltration

In Versuch B wurde die in A getestete Ultrafiltrationsmembran L-6 für eine Diafiltration (Membranfiltration mit Verdünnung durch Zugabe von Lösemitteln) durchgeführt.

I. Herstellung einer Lösung einer Polyalkenamer-haltigen Produktmischung

Als Polyalkenamer-haltige Produktmischung wurde Vestenamer® 8020 (Polyoctenamer) der Fa. Evonik, Deutschland, eingesetzt.

Herstellung einer Lösung (10 Gew.-%) einer Polyoctenamer-haltigen Produktmischung aus Pellets (Feedmischung):

| | |
|---|---|
| Irganox 1076 | 1,56 g |
| Vestenamer 8020 | 130 g |
| Hexan (techn.) | 1170 g |

Die Lösung wurde unter Rückfluss durch sukzessive Zudosierung der Polyoctenamerpellets in kontinuierlich gerührtes Hexan hergestellt. Die hergestellte Lösung wurde auf zwei Feed-Lösungen aufgeteilt.

II. Durchführung der Diafiltration

Parameter der Diafiltration (Ultrafiltrationsmembran L-6):

| | |
|---|---|
| Transmembrandruck: | 5 bar |
| Durchfluss im Kreislauf: | > 150 L/h |
| Temperatur im Kreislauf: | 50 $\pm$ 0,5 °C |
| Permeatfluss: | 21,59 kg/(m$^2$·h) |

Der Permeatfluss wurde über die Volumenänderung in einen bestimmten Zeitraum im Vorlagebehälter bestimmt (kalibrierte Volumenskala). Die entnommene Permeatmenge wurde durch Zugabe von frischem Hexan in die Vorlage kompensiert (ca. 200 mL). Während der Diafiltration war der Kugelhahn 8a geschlossen und der Kugelhahn 8b geöffnet.

Bei konstanter Zugabe an frischem Lösemittel (Hexan) kann der Quotient aus End- und Anfangskonzentration in der Lösung über Gleichung 1 bestimmt werden.

$$\frac{C(Feed,end)}{C(Feed,start)}=\exp\left(-(1-R)\cdot\frac{V(Wash)}{V(Feed)}\right) \qquad 1$$

Hierin bedeuten C(Feed, end) und C(Feed,start) die Anteile einer Komponente am Ende bzw. zu Beginn einer Messung in der Feed-Lösung, R den Rückhalt der Komponente, V(Feed) das Volumen der gewaschenen Feedlösung und V(Wash) das Volumen des Lösemittels, das während der Diafiltration eingebracht wurde. Der Versuch wurde bei einem Waschfaktor V(Wash)/V(Feed) = 1,67 abgebrochen.

III. Ergebnis

Die Anteile der Monomere und Oligomere wurden zu Beginn und am Ende der Diafiltration anhand von GCMS-Messungen (analog zu Beispiel A) bestimmt.

Tabelle 5: C(Feed,start) und C(Feed,end) des Diafiltrationsversuches - Anteile an Monomeren und Oligomeren in der Dampfphase in mg/kg Hexan.

|  | C(Feed,start) | C(Feed,end) | $\frac{C(Feed,end)}{C(Feed,start)}$ |
|---|---|---|---|
| Cycloocten Cyclooctan | 5 | <1 | <20 % |
| Cycloocten, dimer | 480 | 90 | 18,8 % |
| Cycloocten, trimer | 590 | 90 | 15,3 % |
| Cycloocten, tetramer | 250 | 30 | 12 % |

Es konnte eine signifikante Abreicherung der Oligomere beobachtet werden.

Im Anschluss wurden die Anteile an Stoffen in den beiden Feedlösungen zu Anfang und am Ende der Diafiltration mittels GPC ermittelt (siehe oben).

Tabelle 6: Anteile an Monomeren, Oligomeren und Polymer in den Feed-Lösungen zu Beginn und am Ende der Diafiltration.

| Probe | Trockenrückstand (Gew.-%) | Mn in g/mol | Mw in g/mol | Mp in g/mol | Polydispersität | Anteile <1000 g/mol | Anteile <25000 g/mol | Anteile >25000 g/mol |
|---|---|---|---|---|---|---|---|---|
| Feed, Start, Probe 1 | 10.82 | 5000 | 141000 | 91000 | 27.6 | 4.75 | 9.88 | 90.12 |
| Feed, Start, Probe 2 | 10.50 | 5900 | 142000 | 91100 | 24.1 | 4.55 | 10.22 | 89.8 |
| Feed, Ende, Probe 1 | 10.61 | 9000 | 147100 | 90600 | 16.3 | 1.90 | 5.83 | 94.17 |
| Feed, Ende, Probe 2 | 10.22 | 8500 | 146100 | 90100 | 17.1 | 2.02 | 6.20 | 93.8 |

Die Anteile an Monomeren und Oligomeren unterhalb von 1000 g/mol konnte durch die Diafiltration deutlich verringert werden. Die Polyoctenamer-Zusammensetzung enthielt am Ende der Diafiltraton jeweils etwa 94 % an Polymeren mit einer molaren Masse von über 25000 g/mol.

**Patentansprüche**

1.  Verfahren zur Herstellung einer Polyalkenamer-haltigen Zusammensetzung, umfassend die Schritte:

    a) Umsetzen mindestens eines Cycloalkens durch ringöffnende, metathetische Polymerisation unter Erhalt einer Polyalkenamer-haltigen Produktmischung, und
    b) Aufarbeiten der Produktmischung zur Entfernung der Monomere und der Oligomere der Cycloalkene unter Erhalt der Polyalkenamer-haltigen Zusammensetzung,

    **dadurch gekennzeichnet, dass** Schritt b) durch eine Diafiltration erfolgt.

2.  Verfahren nach einem der vorherigen Ansprüche, **dadurch gekennzeichnet, dass** die Membran der Membranfilter für die Diafiltration eine Trennschicht aufweisen, die ausgewählt ist aus Polymeren, Glas, Metall, Keramik oder deren Gemischen.

3.  Verfahren nach einem der vorherigen Ansprüche, **dadurch gekennzeichnet, dass** das Cycloalken ausgewählt ist aus der Gruppe bestehend aus Cyclobuten, Cyclopenten, Cyclohepten, Cycloocten, Cyclononen, Cyclodecen, Cyclododecen, Cycloocta-1,5-dien, 1,5-Dimethylcycloocta-1,5-dien, Cyclodecadien, Norbornadien, Cyclododeca-1,5,9-trien, Trimethyl-cyclododeca-1,5,9-trien, Norbornen (Bicyclo[2.2.1]hept-2-en), 5-(3'-Cyclohexenyl)-2-norbornen, 5-Ethyl-2-norbornen, 5-Vinyl-2-norbornen, 5-Ethyliden-2-norbornen, Dicyclopentadien und Mischungen davon.

4.  Verfahren nach einem der vorherigen Ansprüche, **dadurch gekennzeichnet, dass** sich die Produktmischung nach der Umsetzung (Schritt a) noch in einem Lösemittel befindet und die Diafiltration in dem gleichen Lösemittel durchgeführt wird.

5.  Verfahren nach einem der Ansprüche 1 bis 4, **dadurch gekennzeichnet, dass** Produktmischung aus der Umsetzung (Schritt a) in die feste Form überführt wird und für die anschließenden Durchführung der Diafiltration wieder in Lösung gebracht wird.

6.  Verfahren nach einem der vorherigen Ansprüche, **dadurch gekennzeichnet, dass** die Umsetzung von Cycloalkenen in Gegenwart eines Katalysators, vorzugsweise enthaltend mindestens enthaltend mindestens ein Übergangsmetallhalogenid und eine Organometallverbindung oder enthaltend mindestens einen Übergangsmetall-Carben-Komplex erfolgt.

7.  Verfahren nach einem der vorherigen Ansprüche, **dadurch gekennzeichnet, dass** die Umsetzung von Cycloalkenen in Gegenwart eines Reglers, vorzugsweise in Gegenwart von acyclischen Alkenen als Regler mit einer oder mehreren nichtkonjugierten Doppelbindungen, oder cyclische Verbindungen, die in ihrer Seitenkette eine Doppelbindung aufweisen, erfolgt.

8.  Verfahren nach einem der vorherigen Ansprüche, **dadurch gekennzeichnet, dass** das Lösemittelgemisch mindestens einen Stabilisator enthält.

9.  Verwendung mindestens einer Polyalkenamer-haltigen Zusammensetzung, die nach einem der Ansprüche 1 bis 9 erhalten wird, in Verpackungsmaterialien.

10. Verwendung nach Anspruch 9, **dadurch gekennzeichnet, dass** die Verpackungsmaterialien für Lebensmittel verwendet werden.

Figur 1

**Europäisches Patentamt**
**European Patent Office**
**Office européen des brevets**

# EUROPÄISCHER RECHERCHENBERICHT

Nummer der Anmeldung

EP 15 18 8716

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y<br>A | EP 2 017 308 A1 (KURARAY CO [JP])<br>21. Januar 2009 (2009-01-21)<br>* Absätze [0002] - [0004], [0059] -<br>[0061], [0095], [0103] - [0108], [0202]<br>- [0204]; Ansprüche 1,4-7,11,22 *<br>----- | 9,10<br><br>1-7,9,10<br>8 | INV.<br>B01D61/14<br>C08G61/08<br>C08G61/12 |
| Y<br><br>A | EP 2 799 465 A1 (EVONIK INDUSTRIES AG<br>[DE]) 5. November 2014 (2014-11-05)<br>* Absätze [0007] - [0012], [0034] -<br>[0037], [0053], [0054], [0063], [0068]<br>- [0073]; Ansprüche 1,15 *<br>----- | 1-7,9,10<br><br>8 | |
| X<br><br><br>A | WO 03/062253 A1 (UNIV GENT [BE]; VERPOORT<br>FRANCIS WALTER CORNEL [BE]; DE CLERCQ BOB<br>[BE] 31. Juli 2003 (2003-07-31)<br>* Seite 1, Zeile 15 - Seite 5, Zeile 9 *<br>* Seite 18, Zeile 21 - Seite 20, Zeile 24<br>*<br>* Beispiele 7,16,19 *<br>* Ansprüche 44,46,63,82,83 *<br>----- | 1-7<br><br><br>8 | |
| X<br><br>A | US 2003/113740 A1 (MIRKIN CHAD A [US] ET<br>AL) 19. Juni 2003 (2003-06-19)<br>* Abbildung 1; Beispiele 4,5,7 *<br>----- | 1-7<br><br>8 | RECHERCHIERTE SACHGEBIETE (IPC)<br><br>B01D<br>B65D<br>C08G<br>C08L<br>C09D |

Der vorliegende Recherchenbericht wurde für alle Patentansprüche erstellt

| Recherchenort | Abschlußdatum der Recherche | Prüfer |
|---|---|---|
| München | 7. Dezember 2015 | Meiners, Christian |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.....................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 15 18 8716

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-12-2015

| Im Recherchenbericht angeführtes Patentdokument | Datum der Veröffentlichung | Mitglied(er) der Patentfamilie | Datum der Veröffentlichung |
|---|---|---|---|
| EP 2017308 A1 | 21-01-2009 | AU 2007244150 A1 | 08-11-2007 |
| | | CA 2649683 A1 | 08-11-2007 |
| | | CN 101432370 A | 13-05-2009 |
| | | EP 2017308 A1 | 21-01-2009 |
| | | ES 2414305 T3 | 18-07-2013 |
| | | JP 5296532 B2 | 25-09-2013 |
| | | KR 20090016568 A | 16-02-2009 |
| | | TW I417336 B | 01-12-2013 |
| | | US 2009169902 A1 | 02-07-2009 |
| | | WO 2007126157 A1 | 08-11-2007 |
| EP 2799465 A1 | 05-11-2014 | EP 2799465 A1 | 05-11-2014 |
| | | WO 2014177418 A1 | 06-11-2014 |
| WO 03062253 A1 | 31-07-2003 | AT 348835 T | 15-01-2007 |
| | | AT 429437 T | 15-05-2009 |
| | | AU 2003236511 B2 | 09-04-2009 |
| | | CA 2473029 A1 | 31-07-2003 |
| | | DE 60310521 T2 | 08-11-2007 |
| | | DK 1468004 T3 | 30-04-2007 |
| | | DK 1743899 T3 | 22-06-2009 |
| | | EP 1468004 A1 | 20-10-2004 |
| | | EP 1743899 A1 | 17-01-2007 |
| | | ES 2279117 T3 | 16-08-2007 |
| | | ES 2323803 T3 | 24-07-2009 |
| | | JP 4477879 B2 | 09-06-2010 |
| | | JP 5100728 B2 | 19-12-2012 |
| | | JP 2005515260 A | 26-05-2005 |
| | | JP 2010077128 A | 08-04-2010 |
| | | US 2005043541 A1 | 24-02-2005 |
| | | WO 03062253 A1 | 31-07-2003 |
| US 2003113740 A1 | 19-06-2003 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2017308 A1
- WO 9407944 A1
- WO 9407379 A1
- WO 9806779 A1
- US 2013172635 A
- US 20120123079 A
- WO 2010142979 A
- US 20120279922 A
- EP 0943645 B1
- EP 2017308 A

**In der Beschreibung aufgeführte Nicht-Patentliteratur**

- **A. DRÄXLER.** Handbook of Elastomers. 2001, 697-722
- **K. J. IRVIN ; J. C. MOL.** Olefine Metathesis and Metathesis Polymerization. Academic Press, 1997
- **R. H. GRUBBS.** Handbook of Metathesis. Wiley-VCH, 2003, vol. 1-3
- **WESKAMP, T. ; KOHL, F. J. ; HERRMANN, W. A.** *J. Organomet. Chem.,* 1999, vol. 582, 362-365
- **WESKAMP, T. ; KOHL, F. J. ; HIERINGER, W. ; GLEICH, D. ; HERMANN, W. A.** *Angew. Chem. Int. Ed.,* 1999, vol. 38, 2416-2419
- **NGUYEN, S. T. ; JOHNSON, L. W. ; GRUBBS, R. H. ; ZILLER, J. W.** *J. Am. Chem. Soc.,* 1992, vol. 114, 3974-3975
- **BIELAWSKI, C. W. ; GRUBBS, R. H.** *Angew. Chem. Int. Ed.,* 2000, vol. 39, 2903-2906
- **M. SCHLEGELMILCH.** Geruchsmanagement: Methoden zur Bewertung und Verminderung von Geruchsemissionen. Verlag, 2009
- **M. SCHÖN ; R. HÜBNER.** Geruch - Messung und Beseitigung. Vogel Verlag, 1996
- Umweltbundesamt, Innenraumlufthygiene-Kommission des Umweltbundesamtes, Leitfaden für die Innenraumhygiene. *Schulgebäuden,* 2008, 47
- **G. SCHARFENBERGER.** *Papier + Kunststoff-Verarbeiter,* 1990, 10
- **T. MELIN ; R. RAUTENBACH.** Membranverfahren: Grundlagen der Modul- und Anlagenauslegung. Springer, 2007, 313
- **T. MELIN ; R. RAUTENBACH.** Membranverfahren: Grundlagen der Modul- und Anlagenauslegung. Springer, 2007, 286
- **R. MALLADA, M.** Inorganic Membranes: Synthesis, Characterization and Applications. Elsevier, 2008, 182
- **T. MELIN ; R. RAUTENBACH.** Membranverfahren: Grundlagen der Modul- und Anlagenauslegung. Springer, 2010, 2007